# EUROPEAN PATENT APPLICATION

(11) **EP 3 450 463 A1**
(43) Date of publication of application: **06.03.2019**
(21) Application number: 17789658.6
(22) Date of filing: 27.04.2017
(51) Int. Cl.: C08B 37/16

(54) **METHOD FOR PRODUCING POLYROTAXANE**

(30) Priority: 27.04.2016 JP 2016089670
(71) Applicant: Osaka University, Suita-shi, Osaka 565-0871 (JP)
(72) Inventor: HARADA, Akira, Suita-shi Osaka 565-0871 (JP); TAKASHIMA, Yoshinori, Suita-shi Osaka 565-0871 (JP); KOHRI, Shunji, Suita-shi Osaka 565-0871 (JP); NAKAHATA, Masaki, Suita-shi Osaka 565-1871 (JP)
(74) Representative: Vossius & Partner Patentanwälte Rechtsanwälte mbB
(86) International application number: PCT/JP2017/016723
(87) International publication number: WO 2017/188376

(57) **Abstract**

This invention provides a method for producing a polyrotaxane, the method being capable of producing a polyrotaxane in a high yield within a short period of time, using a small number of steps. The method for producing the polyrotaxane of the present invention is a method for producing a polyrotaxane having a structure in which a linear molecule passes through openings of cyclic molecules, the method comprising the step of heating a starting material containing the linear molecule and the cyclic molecule to the melting temperature of the linear molecule or higher, to obtain a clathrate compound of the linear molecule and the cyclic molecule.

## Description

### Technical Field

The present invention relates to a method for producing a polyrotaxane.

### Background Art

Polyrotaxane has a structure such that a linear molecule passes through the openings of cyclic molecules in a skewering manner, and is a known material as one type of a supramolecule. Polyrotaxane comprises a clathrate compound that is formed such that a linear molecule passes through multiple cyclic molecules. The linear molecule constituting the clathrate compound has bulky substituents (blocking groups) at both ends. The presence of such blocking groups can prevent cyclic molecules from escaping from the ends of the linear molecule.

Polyrotaxane, which has various characteristics, shows unprecedented high-performance characteristics when incorporated into, for example, various materials. Thus, polyrotaxane is considered to be highly useful, and the study thereof is currently actively conducted. For example, Patent Literature (PTL) 1 discloses a technique of crosslinking the cyclic molecules of polyrotaxane molecules via a reversible bond by host-guest interactions etc. PTL 1 also discloses that a polymer material having a three-dimensional network structure with a skeleton of such a polyrotaxane has excellent self-restorability etc. It is also known that a tubular molecule can be obtained by bonding cyclic molecules (e.g., cyclodextrins) of polyrotaxane to each other.

The above polyrotaxane is known to comprise, for example, a polyethylene glycol (PEG) as a linear molecule, and α-cyclodextrin (αCD) as a cyclic molecule. Such a polyrotaxane is known to be synthesized generally through a step of mixing a saturated aqueous solution of αCD with PEG to allow αCD to form a clathrate compound with PEG (see, for example, Non-patent Literature (NPL) 1).

### Citation List

### Patent Literature

PTL 1: WO 2016/006413

### Non-patent Literature

NPL 1: Nature 356, 325 (1992)

### Summary of Invention

### Technical Problem

However, in the production method for a polyrotaxane disclosed in NPL 1, a reaction is performed at around room temperature using a large amount of water as a solvent, and the subsequent step is thus restricted; i.e., water must be removed, which results in a very large number of steps, requiring time and effort for the production. Further, since a large amount of water is used for preparing a clathrate compound by mixing cyclic molecules and linear molecules, the reaction medium becomes bulky, which is problematic in terms of mass production. In view of this, it has been desired to obtain a polyrotaxane in a high yield within a short period of time, using a small number of steps.

The present invention has been made in view of the above problems. An object of the present invention is to provide a method for producing a polyrotaxane, the method being capable of producing a polyrotaxane in a high yield within a short period of time, using a small number of steps.

### Solution to Problem

The present inventors conducted extensive research to achieve the above object. As a result, the inventors found that the above object can be achieved by heating a cyclic molecule and a linear molecule at a specific temperature. The present invention has thus been completed.

Specifically, the present invention includes, for example, the subject matter as stated in the following items.

Item 1. A method for producing a polyrotaxane having a structure in which a linear molecule passes through openings of cyclic molecules,
the method comprising the step of heating a starting material containing the linear molecule and the cyclic molecule to the melting temperature of the linear molecule or higher to obtain a clathrate compound of the linear molecule and the cyclic molecule.

Item 2. The method for producing a polyrotaxane according to Item 1, further comprising the step of reacting the clathrate compound with a blocking molecule to attach a blocking group at each end of the linear molecule in the clathrate compound.

Item 3. The method for producing a polyrotaxane according to Item 1 or 2, further comprising the step of adding a solvent to the starting material.

Item 4. The method for producing a polyrotaxane according to any one of Items 1 to 3, wherein
the cyclic molecule comprises at least one member selected from the group consisting of α-cyclodextrin, β-cyclodextrin, and γ-cyclodextrin.

### Advantageous Effects of Invention

The method for producing a polyrotaxane of the present invention is capable of producing a polyrotaxane in a high yield within a short period of time, using a small number of steps.

### Brief Description of Drawings

Fig. 1 is a schematic diagram showing an example of the production scheme for a polyrotaxane.
Fig. 2 shows the results of powder X-ray diffraction measurement of the powder obtained in Examples 1 to 3.
Fig. 3 is a graph showing a relationship between the heating temperature and the yield with respect to each clathrate compound obtained in Examples 1 and 4 to 7.
Fig. 4 is a graph showing the yield of the clathrate compound obtained in Examples 1 to 3.

### Description of Embodiments

Embodiments of the present invention are described in detail below. In this specification, the terms "contain," "include," and "comprise" include the concepts of "contain," "include," "consist essentially of," and "consist only of."

The present invention includes a method for producing a polyrotaxane having a structure in which a linear molecule passes through the openings of cyclic molecules. In particular, the method comprises the step of heating a starting material containing the linear molecule and the cyclic molecule to the melting temperature of the linear molecule or higher to obtain a clathrate compound of the linear molecule and the cyclic molecule. The production method according to this embodiment is capable of producing a polyrotaxane in a high yield within a short period of time, using a small number of steps.

Polyrotaxane is known to have a structure containing a molecule (rotaxane) comprising a combination of a rotor and an axle. More specifically, polyrotaxane has a structure in which a linear molecule fits into multiple cyclic molecules in a skewering manner.

In the production method according to this embodiment, the starting material contains, at the very least, a linear molecule and a cyclic molecule.

The type of the linear molecule is not particularly limited, as long as the linear molecule is capable of passing through the rings of cyclic molecules. For example, the linear molecule may be the same material as those that have been conventionally used as a linear molecule of a polyrotaxane.

Examples of the linear molecule include polyalkylene resins, polyester resins, polyether resins, polyamine resins, polyamide resins, polyacrylic resins, and the like. Examples also include a linear molecule having a benzene ring in the backbone. The linear molecule may be an ionic or non-ionic polymer. Further, the linear molecule may be hydrophilic or hydrophobic.

Specific examples of the linear molecule include polyethylene glycol, polyethylene oxide, polypropylene glycol, polytetramethylene oxide, polyethyl vinyl ether, polymethyl vinyl ether, poly n-propylvinyl ether, polyoxytrimethylene, polytetrahydrofuran, polycaprolactone, polyethylene, polypropylene, polyvinyl acetal, polyvinyl methyl ether, polyvinylpyrrolidone, polyacrylamide, polymethylacrylate, polymethylmethacrylate, polystyrene, and the like. Of course, the linear molecule is not limited to those mentioned above as examples, and other types of polymers may also be used as the linear molecule.

The type of the functional group binding to the end of the linear molecule is not limited. Examples include hydroxyl, amino, carboxyl, thiol, and amide, from the viewpoint that blocking groups are easily attached to the ends, as described later.

The linear molecule may have branched chains as long as the linear molecule is configured to penetrate the inside of the rings of the cyclic molecules.

Further, the weight average molecular weight Mw of the linear molecule is not particularly limited. For example, the weight average molecular weight is preferably 3000 to 500000. In this case, the linear molecule is easily heated to the melting temperature or higher, and a clathrate compound of the linear molecule and the cyclic molecule is easily formed. Further, when the weight average molecular weight Mw of the linear molecule is within the above range, the production stability of polyrotaxane also easily improves. The weight average molecular weight as used herein refers to a molecular weight in terms of polyethylene glycol as measured by gel permeation chromatography (GPC).

The starting material may contain only one type of linear molecule, or two or more different types of linear molecules.

The cyclic molecule is not particularly limited, as long as it is a compound conventionally used in polyrotaxanes. Examples of the cyclic molecule include cyclodextrins, such as α-cyclodextrin, β-cyclodextrin, γ-cyclodextrin, dimethyl cyclodextrin, glucosyl cyclodextrin, and derivatives or modified products of these cyclodextrins; cyclic oligomers; and the like. Examples of cyclic oligomers include ethylene glycol oligomers, ethylene oxide oligomers, propylene glycol oligomers, polysaccharides, and the like. Such cyclic molecules can be used alone or in a combination of two or more to produce a polyrotaxane. Of course, the cyclic molecule is not limited to those mentioned above as examples, and other types of cyclic molecules may also be used.

The cyclic molecule preferably comprises at least one member selected from the group consisting of α-cyclodextrin, β-cyclodextrin, and γ-cyclodextrin. In this case, a clathrate compound of the linear molecule and the cyclic molecule is easily formed, achieving excellent production stability.

The starting material may contain only one type of cyclic molecule, or two or more different types of cyclic molecules.

The ratio between the linear molecule and the cyclic molecule in the starting material is not particularly limited. To more easily form a clathrate compound, the cyclic molecule is used in an amount of 1 to 50 moles, preferably 1 to 30 moles, and particularly preferably 1 to 20 moles, per mole of the linear molecule.

The method for preparing the starting material is not particularly limited; the starting material may be prepared by mixing the linear molecule and the cyclic molecule at a predetermined ratio. The mixing method is also not particularly limited.

The starting material may consist of only the linear molecule and the cyclic molecule. As long as the effect of the present invention is not impaired, the starting material may also contain materials other than the linear molecule and the cyclic molecule. Examples of such materials other than the linear molecule and the cyclic molecule include the solvents mentioned later.

In the heating step, the starting material is heated to the melting temperature of the linear molecule or higher. By this heating, a clathrate compound of the linear molecule and the cyclic molecule is obtained.

The melting temperature of the linear molecule as used herein refers to a value of the melting temperature measured, for example, by differential scanning calorimetry (DSC).

In the heating step, when the linear molecule is heated to the melting temperature or higher, the linear molecule begins to melt and change to liquid form. In this liquid, a clathrate compound of the linear molecule and the cyclic molecule is formed; i.e., the linear molecule passes through the rings of multiple cyclic molecules one by one to form a clathrate compound. Therefore, the linear molecule melted by heating to the melting temperature or higher can also serve as a medium for forming a clathrate compound.

In the heating step, the lower limit of the heating temperature is not particularly limited, as long as it is the melting temperature of the linear molecule or higher. For example, the lower limit of the heating temperature is preferably 10°C or more higher, more preferably 20°C or more higher, still more preferably 30°C or more higher, and particularly preferably 40°C or more higher, than the melting temperature of the linear molecule. When the melting temperature has a range (for example, polyethylene glycol has a melting temperature within the range of 45 to 55°C), the expression "X°C or more higher than the melting temperature" means X°C or more higher than the minimum value of its range.

More specifically, for example, when the linear molecule is polyethylene glycol, which has a melting temperature of 45 to 55°C, the lower limit of the heating temperature is preferably 90°C, more preferably 110°C, and particularly preferably 115°C.

Further, in the heating step, the upper limit of the heating temperature is the melting temperature of the linear molecule or higher, and is not particularly limited as long as it is a temperature under which the linear molecule does not undergo decomposition. For example, the temperature is 200°C or lower. When the linear molecule is polyethylene glycol, which has a melting temperature of 45 to 55°C, the upper limit of the heating temperature is preferably 200°C, more preferably 150°C, and particularly preferably 120°C.

The method of heating is not particularly limited, and a known heating means generally used in a synthesis involving an organic reaction etc. may be used.

The heating step may be performed under any conditions, i.e., under atmospheric pressure, under increased pressure, or under reduced pressure. The heating step is preferably performed under atmospheric pressure to make the reaction process simpler, and to more easily obtain a stable clathrate compound.

When heating, the starting material may be stirred etc. Alternatively, heating of the starting material may be performed while the starting material is allowed to stand. To more quickly form the clathrate compound of the linear molecule and the cyclic molecule, and to further increase the yield of the clathrate compound, heating is preferably performed while giving shear stress to the starting material by stirring etc.

Examples include a method of heating the starting material heated at the melting temperature of the linear molecule or higher while stirring with a stirrer etc.; a method of heating the starting material heated at the melting temperature of the linear molecule or higher while shaking in a shaker; a method of heating the starting material heated at the melting temperature of the linear molecule or higher while mixing in a mill etc.; and the like. Of these, a method of heating while mixing in a mill etc. is preferable since the clathrate compound is more quickly formed, the overall reaction time can be further shortened, and the yield also improves. The type of mill is not particularly limited; and a wide variety of mills can be used, including commercially available mills, such as a ball mill, a planetary ball mill, or a bead mill.

The heating time in the heating step is not particularly limited, and can be appropriately adjusted to achieve a desirable inclusion amount. The heating time in the heating step is preferably 1 to 48 hours, and more preferably 1 to 24 hours, to further shorten the time of the entire reaction process. It is also possible to set the heating time to about 8 hours, depending on the type of the starting material.

By performing the heating step above, a clathrate compound is obtained as a precipitate. The synthesis of the clathrate compound can be confirmed, for example, by powder X-ray diffraction measurement. Specifically, when formed, the clathrate compound can have a structure in which the cyclic molecules are aligned to form a channel; thus, the synthesis of the clathrate compound can be confirmed based on the presence or absence of a peak specific to this structure.

In the clathrate compound, the number of cyclic molecules through which a linear molecule passes in a skewering manner, i.e., the number of cyclic molecules through which one linear molecule penetrates (also referred to as the inclusion amount), is not particularly limited. When the cyclic molecule is cyclodextrin, the lower limit of the inclusion amount is preferably 0.15, with the maximum inclusion amount being defined as 1. The upper limit of the inclusion amount is preferably 0.70, more preferably 0.60, more preferably 0.50, and particularly preferably 0.40. In this case, the production stability of the clathrate compound improves; moreover, the ultimately obtained polyrotaxane has excellent physical properties.

In the heating step, the starting material may contain a solvent. That is, the production method according to this embodiment may further comprise a step of adding a solvent to the starting material. The addition of a solvent to the starting material can be performed at any stage. For example, it is possible to add a solvent during the preparation of the starting material; add a solvent to a previously prepared starting material before the heating step; or add a solvent to the starting material during the heating step.

The solvent is preferably water. Other than water, the solvent may be any type of organic solvent.

The amount of the solvent added may be, for example, the same weight as that of the cyclic molecule based on the total amount of the linear molecule and the cyclic molecule. When the starting material contains a solvent in such an amount, the formation of the clathrate compound is further accelerated, and removal of the cyclic molecules from the linear molecule is further prevented; thus, a desired clathrate compound can be obtained within a short period time, and, furthermore, the yield is likely to become higher. The amount of the solvent added is preferably 50% or less, more preferably 30% or less, and particularly preferably 10% or less, based on the total amount of the linear molecule and the cyclic molecule.

The reaction product obtained through the heating step is purified by optionally subjecting the product to treatment such as washing and drying to thus obtain a clathrate compound. The method of washing is not particularly limited. Examples include a method comprising suspending the product in hot water, and performing ultrasonic cleaning. This can remove non-inclusion products. After washing, centrifugation, lyophilization, and other treatments are performed to obtain a clathrate compound.

The thus-obtained clathrate compound has a structure in which the linear molecule does not have blocking groups at its ends, as described later. Such a clathrate compound is called a polypseudorotaxane. Therefore, the reaction product powder obtained through the above heating step can be considered a polypseudorotaxane.

The clathrate compound obtained through the above heating step may be directly used in various applications, as a polypseudorotaxane. Otherwise, bulky functional groups may be used in the thus-obtained polypseudorotaxane (clathrate compound) to block the ends of the linear molecule so as to prevent removal of the cyclic molecules from the linear molecule.

Specifically, the production method according to this embodiment may further comprise a step of attaching blocking groups to the ends of the linear molecule in the clathrate compound by reacting the clathrate compound with a blocking molecule.

The type of the blocking molecule is not particularly limited. Examples include a compound that is used to attach blocking groups to a polypseudorotaxane.

Specific examples of the blocking group include aryl groups, such as adamantane, dinitrophenyl, groups from cyclodextrins, N-carbobenzoxy-L-tyrosine (Z-L-tyrosine), trityl, pyrenyl, and phenyl; 2-butyldecyl, fluoresceins, and pyrenes; and derivatives or modified products thereof. The blocking groups mentioned above as examples may have one or more substituents. Therefore, examples of the blocking molecule include a molecule that is capable of reacting with the ends of the linear molecule, and attaching the blocking groups to the ends.

When the cyclic molecule has an ionic functional group, the blocking groups may also have an ionic functional group. In this case, the blocking groups and the cyclic molecules ionically repel each other, whereby the state in which the cyclic molecules are skewered by the linear molecule can be maintained.

The method of reacting the blocking molecules with the ends of the linear molecule is not particularly limited, and conventionally used methods can be used.

The blocking groups can be directly or indirectly attached to both ends of the linear molecule via amide bonds, ester bonds, or the like.

Although the blocking groups are preferably attached to both ends of the linear molecule, it is possible for some of the polyrotaxanes to only have the blocking group at one end.

Since such bulky blocking groups are attached to both ends of the linear molecule, the state of cyclic molecules penetrated by a linear molecule in a skewered manner can be maintained. More specifically, the cyclic molecules of polyrotaxane can freely move while including the linear molecule; however, due to the blocking groups attached to both ends of the linear molecule, they are never separated from the linear molecule.

As is known, the presence or absence of the blocking groups can be confirmed, for example, by the peak derived from the cyclic molecule, and the peak derived from the linear molecule in the ¹H-NMR spectrum. Alternatively, the synthesis of the clathrate compound can also be determined from the GPC chromatogram.

After the blocking groups are attached as above, washing and drying can be performed as required, to thus obtain, as a powder, a polyrotaxane whose ends are blocked. Washing and drying may be performed in accordance with known methods.

The production method according to this embodiment comprises the above heating step, and optionally comprises a step of adding a solvent to the starting material, or a step of attaching blocking groups, or both. Therefore, the polyrotaxane obtained by the production method according to this embodiment may or may not have the blocking groups at the ends of the linear molecule.

The weight average molecular weight Mw of the polyrotaxane obtained by the production method according to this embodiment is not particularly limited, and may be, for example, 15000 to 1000000.

The method for producing a polyrotaxane according to this embodiment is capable of producing a polyrotaxane in a high yield within a shorter period of time, using a smaller number of steps than conventional methods. In particular, in this embodiment, heating is performed at the melting temperature of the linear molecule or higher in the heating step, accelerating the formation of a clathrate compound to easily obtain a clathrate compound. Moreover, to form a clathrate compound, it is not necessary to use a large amount of a solvent (e.g., water), or it is not necessary to use any solvent; thus, a step of removing the solvent from the obtained clathrate compound is not required. This means that a polyrotaxane can be produced by a simpler method.

In particular, heating at the melting temperature of the linear molecule or higher makes it easy to control the inclusion percentage (inclusion amount) of the cyclic molecule with respect to the linear molecule. In terms of a conventional method for producing a polyrotaxane at around room temperature while using a large amount of water, controlling the inclusion percentage of the cyclic molecules with respect to the linear molecule would be difficult; and when heating is performed in a solvent, achieving a desired inclusion amount would be difficult, since removal of the cyclic molecules easily occurs. In contrast, if heating is performed at the melting temperature of the linear molecule or higher, controlling the inclusion percentage of the cyclic molecules with respect to the linear molecule becomes easy, since removal of the cyclic molecules does not easily occur.

In the preparation of a clathrate compound by mixing the cyclic molecule and the linear molecule, a solvent is not used; or, even if a solvent is used, the amount is within a small amount range. Thus, the reaction medium is not likely to become bulky, making it possible to produce a polyrotaxane with more excellent efficiency. Therefore, the method for producing a polyrotaxane according to this embodiment is also advantageous in terms of the mass production of polyrotaxane.

### Examples

The present invention is described in more detail with reference to Examples. However, the scope of the invention is not limited to the embodiments of these Examples.

### Example 1-1

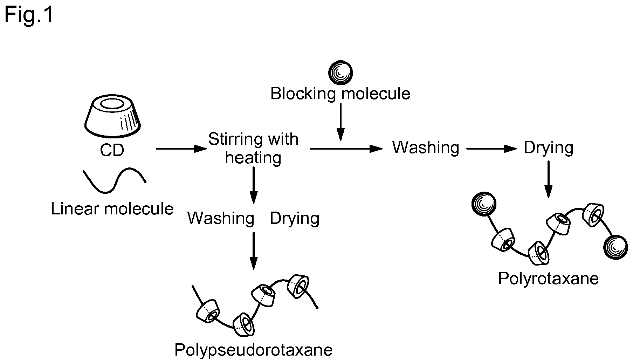

A clathrate compound (polypseudorotaxane) was produced in accordance with the reaction scheme shown in Fig. 1. A starting material was prepared by mixing 2.2 g of a polyethylene glycol having hydroxyl groups at both ends (PEG, weight average molecular weight: 2 x 10³ g/mol, melting temperature: 45 to 55°C, "165-09105" produced by Wako Pure Chemical Industries, Ltd.) as a linear molecule and 2.0 g of α-cyclodextrin (αCD) as a cyclic molecule. This starting material was heated to 120°C, followed by stirring for 24 hours. Thereafter, the resulting mixture was suspended in 40 mL of hot water at 60°C, and ultrasonic cleaning was performed to elute and remove the non-inclusion products. The precipitate was subjected to centrifugal separation, followed by lyophilization to give a powder. The obtained powder was subjected to powder X-ray diffraction measurement.

### Example 1-2

A clathrate compound (polypseudorotaxane) was produced in accordance with the reaction scheme shown in Fig. 1. A polyethylene glycol having hydroxyl groups at both ends (PEG, weight average molecular weight: 2 x 10³ g/mol, melting temperature: 45 to 55°C) (0.4 g) used as a linear molecule was heated to 80°C, and melted. Then, 1.6 g of α-cyclodextrin (αCD) as a cyclic molecule was added to the resulting product, and mixed to prepare a starting material. This starting material was heated to 120°C, followed by stirring for 24 hours. Thereafter, the resulting mixture was suspended in 40 mL of hot water at 60°C, and ultrasonic cleaning was performed to elute and remove the non-inclusion products. The precipitate was subjected to centrifugal separation, followed by lyophilization to give a powder. The obtained powder was subjected to powder X-ray diffraction measurement.

### Example 2

A powder was obtained as in Example 1-2, except that a PEG having carboxyl groups at both ends instead of hydroxyl groups (weight average molecular weight: 2 x 10³ g/mol, melting temperature: 45 to 55°C, "165-09105" produced by Wako Pure Chemical Industries, Ltd.) was used as the linear molecule. The obtained powder was subjected to powder X-ray diffraction measurement.

### Example 3

A powder was obtained as in Example 1-2, except that a PEG having amino groups at both ends instead of hydroxyl groups (weight average molecular weight: 2 x 10³ g/mol, melting temperature: 45 to 55°C, "165-09105" produced by Wako Pure Chemical Industries, Ltd.) was used as the linear molecule. The obtained powder was subjected to powder X-ray diffraction measurement.

### Examples 4 to 7

A powder was obtained as in Example 1-1, except that the temperature for heating the starting material was changed to 90°C, 100°C, 110°C, and 130°C, respectively.

### Example 8

A powder was obtained as in Example 2, except that the amount of αCD used was changed to 24 g, the stirring at the time of heating was changed to use a planetary ball mill, and the treatment time in the planetary ball mill was set to 6 hours.

### Example 9

N,N-Dimethylformamide (DMF) as an organic solvent, N,N-diisopropylethylamine (DIPEA) as a base, adamantane amine hydrochloride (AdNH₃Cl) as a blocking molecule, and benzotriazol-1-yl oxy-trisdimethylaminophosphonium salt (BOP) as a condensation agent were added to 4.2 g of the clathrate compound obtained in Example 2. Then, the mixture was allowed to react under suspension conditions at room temperature for 3 days. The precipitate collected by centrifugation was dialyzed against dimethylsulfoxide (DMSO) and then water, followed by lyophilization to give a target product (see Fig. 1). The formation of polyrotaxane was confirmed by NMR and GPC measurement.

### Evaluation Method

### NMR

The NMR measurement was performed with a JEOL JNM-ECA 400 (400 MHz), using a solution of 1 wt% NaOD in D₂O as a measurement solvent.

### GPC

The GPC measurement was performed with a Tosoh HLC-8320GPC, using DMSO (10 mM LiBr) as a measurement solvent.

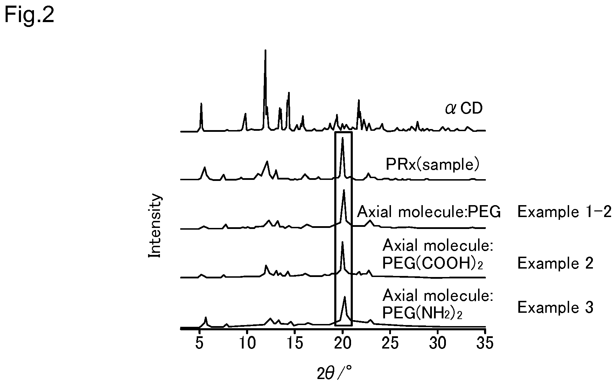

Fig. 2 shows the results of powder X-ray diffraction measurement of the powders obtained in Examples 1-2, 2, and 3. The powders obtained in the Examples all showed a different spectrum pattern from αCD, which was used as a starting material. The powders obtained in all of the Examples were confirmed to be a clathrate compound due to the appearance of a peak at around 2θ = 20°, which is specific to the polyrotaxane sample obtained by conventional methods (i.e. a peak derived from a structure in which αCD is aligned to form a channel).

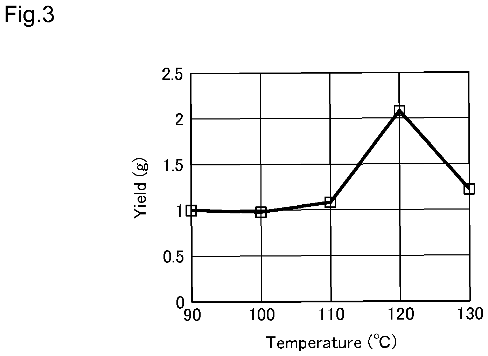

Fig. 3 shows the heating temperature and the yield in relation to the clathrate compounds obtained in Examples 1-1 and 4 to 7. The results reveal that the clathrate compound was obtained in a high yield at any temperature, and that the yield was highest at a heating temperature of 120°C.

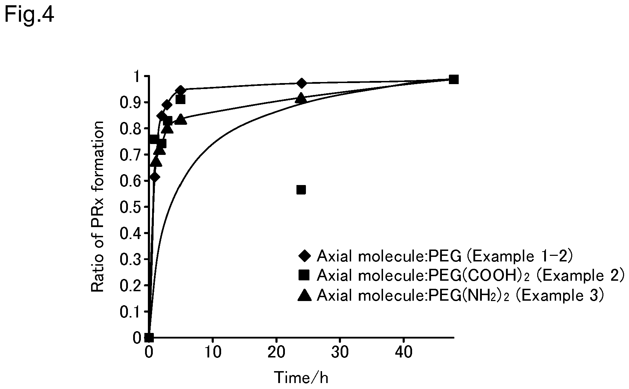

Fig. 4 shows the yield of the clathrate compounds obtained in Examples 1-2, 2, and 3. In Fig. 4, the vertical axis (Y axis) represents a relative yield value to a saturated yield, i.e., the yield ultimately saturated, being defined as 1. The results confirmed that the clathrate compounds were ultimately formed in a nearly maximum yield with the use of a PEG having any terminal group.

**Table 1**

| | | | | | |
|---|---|---|---|---|---|
| Heating time (hr) | 1 | 4 | 8 | 14 | 24 |
| Inclusion amount | 0.31 | 0.46 | 0.55 | 0.61 | 0.65 |

Table 1 shows the inclusion amount of the cyclic molecule in a reaction liquid collected at each predetermined time in the heating step of Example 1-1. The inclusion amount shown in Table 1 is a relative value to the maximum inclusion amount with respect to the linear molecule, being defined as 1. The results reveal that a clathrate compound with a desired inclusion amount can be produced by adjusting the heating time in the heating step.

## Claims

1. A method for producing a polyrotaxane having a structure in which a linear molecule passes through openings of cyclic molecules,
the method comprising the step of heating a starting material containing the linear molecule and the cyclic molecule to the melting temperature of the linear molecule or higher to obtain a clathrate compound of the linear molecule and the cyclic molecule.

2. The method for producing a polyrotaxane according to claim 1, further comprising the step of reacting the clathrate compound with a blocking molecule to attach a blocking group to each end of the linear molecule in the clathrate compound.

3. The method for producing a polyrotaxane according to claim 1 or 2, further comprising the step of adding a solvent to the starting material.

4. The method for producing a polyrotaxane according to any one of claims 1 to 3, wherein
the cyclic molecule comprises at least one member selected from the group consisting of α-cyclodextrin, β-cyclodextrin, and γ-cyclodextrin.
